# EUROPÄISCHE PATENTANMELDUNG

(11) **EP 2 514 652 A1**
(43) Veröffentlichungstag der Anmeldung: **24.10.2012**
(21) Anmeldenummer: 11162454.0
(22) Anmeldetag: 14.04.2011
(51) Int. Cl.: B60W 30/14, B60W 50/08

(54) **Verfahren und Vorrichtung zur Begrenzung der Geschwindigkeit eines Kraftfahrzeugs**

(71) Anmelder: Rastija, Thomas, 9470 Werdenberg (CH); Joerg, Severin, 5707 Seengen (CH); Graf, Mathias, 5702 Niederlenz (CH)
(72) Erfinder: Rastija, Thomas, 9470 Werdenberg (CH); Joerg, Severin, 5707 Seengen (CH); Graf, Mathias, 5702 Niederlenz (CH)
(74) Vertreter: Patentbüro Paul Rosenich AG

(57) **Zusammenfassung**

Es wird ein Verfahren zur Begrenzung der Geschwindigkeit eines Kraftfahrzeugs angegeben, bei dem die erlaubte Höchstgeschwindigkeit (v₁) auf einem Streckenabschnitt, auf dem sich das Kraftfahrzeug befindet, ermittelt wird und eine Ausgabe einer Warnung erfolgt, wenn die erlaubte Höchstgeschwindigkeit (v₁) überschritten wird oder eine Anforderung, die erlaubte Höchstgeschwindigkeit (v₁) zu überschreiten, abgewiesen wird. Um ein temporäres Überschreiten der erlaubten Höchstgeschwindigkeit (v₁) zu ermöglichen, wird die genannte Warnung beziehungsweise die genannte Abweisung kurzfristig unterdrückt. Darüber hinaus wird eine Vorrichtung (1) zur Durchführung des erfindungsgemässen Verfahrens angegeben.

## Beschreibung

Die Erfindung betrifft ein Verfahren zur Begrenzung der Geschwindigkeit eines Kraftfahrzeugs, bei dem die erlaubte Höchstgeschwindigkeit auf einem Streckenabschnitt, auf dem sich das Kraftfahrzeug befindet, ermittelt wird und eine Ausgabe einer Warnung erfolgt, wenn die erlaubte Höchstgeschwindigkeit überschritten wird oder eine Anforderung, die erlaubte Höchstgeschwindigkeit zu überschreiten, abgewiesen wird. Weiterhin betrifft die Erfindung eine Vorrichtung zur Begrenzung der Geschwindigkeit eines Kraftfahrzeugs, umfassend eine Erfassungseinheit zum Ermitteln der erlaubten Höchstgeschwindigkeit auf einem Streckenabschnitt, auf dem sich das Kraftfahrzeug befindet, und Begrenzungsmittel zur Ausgabe einer Warnung bei Überschreitung der erlaubten Höchstgeschwindigkeit oder zum Abweisen einer Anforderung, die erlaubte Höchstgeschwindigkeit zu überschreiten.

Verfahren und Vorrichtungen der genannten Art sind seit einiger Zeit bekannt, insbesondere unter dem Begriff "Intelligent Speed Adaptation" (ISA). Darunter werden sowohl informative oder mahnende sowie unterstützende und eingreifende Methoden verstanden, welche einer Einhaltung einer erlaubten Höchstgeschwindigkeit dienen. Die Erfahrung zeigt, dass besonders schwere Unfälle häufig in Verbindung mit überhöhter Geschwindigkeit auftreten.

Informative oder mahnende Methoden teilen dem Fahrer eine Geschwindigkeitsübertretung mit, greifen aber nicht in die Fahrzeugsteuerung ein. Es obliegt daher dem Fahrer, auf einen solchen Warnhinweis angemessen zu reagieren. Prinzipiell kann die Anzeige über stationäre Anlagen, beispielsweise mit Hilfe von Anzeigen über oder neben der Fahrbahn, erfolgen oder durch fahrzeuggestützte Systeme. Die Erfindung bezieht sich dabei nur auf letztere, das heisst fahrzeuggestützte Systeme.

Fahrzeuggestützte Systeme erlauben prinzipiell auch einen Eingriff in die Steuerung des Fahrzeugs, beispielsweise auf die Motorsteuerung und/oder eine Bremse. Diese werden deshalb als "unterstützende und eingreifende Methoden" bezeichnet. Die Erfindung bezieht sich auch auf diese Systeme.

Häufig wird die erlaubte Höchstgeschwindigkeit mit Hilfe einer Datenbank, in welcher einem bestimmten Streckenabschnitt eine bestimmte erlaubte Höchstgeschwindigkeit zugeordnet ist, in Verbindung mit einem Ortungssystem für das Fahrzeug, insbesondere mit einem GPS-Ortungssystem (Global Positioning System) ermittelt.

Aus dem Stand der Technik sind dazu beispielsweise die CN 101612914 und die CN 101554836 bekannt, nach denen die erlaubte Höchstgeschwindigkeit in der genannten Art ermittelt und in Folge eine Ausgabe einer Warnung erfolgt, wenn die erlaubte Höchstgeschwindigkeit überschritten wird, beziehungsweise eine Anforderung, die erlaubte Höchstgeschwindigkeit zu überschreiten, abgewiesen wird.

Weiterer Stand der Technik betreffend ein Verfahren beziehungsweise eine Vorrichtung zur Begrenzung der Geschwindigkeit eines Kraftfahrzeugs ergibt sich beispielsweise auch aus KR 2009/0093270, US 2011/074299, US 2009/146844, GB 2 445 962, KR 2007/0001028, GB 2 442 492, US 2008/243321, JP 20097018687, US 5,485,161 und US 6,246,948.

Nachteilig an den bekannten Systemen ist, dass sie nicht zwangsläufig zur Verkehrssicherheit beitragen, da durchaus Situationen vorstellbar sind, in denen die Einhaltung der erlaubten Höchstgeschwindigkeit zu einem Unfall führen kann.

Aufgabe der Erfindung ist es daher, ein verbessertes Verfahren und eine verbesserte Vorrichtung zur Begrenzung der Geschwindigkeit eines Kraftfahrzeugs anzugeben. Insbesondere soll die Verkehrssicherheit weiter gesteigert werden.

Erfindungsgemäss wird diese Aufgabe durch ein Verfahren der eingangs genannten Art gelöst, bei dem die genannte Warnung beziehungsweise die genannte Abweisung kurzfristig unterdrückt wird.

Weiterhin wird die Aufgabe der Erfindung durch eine Vorrichtung der eingangs genannten Art gelöst, bei der die Begrenzungsmittel derart ausgestaltet sind, dass die genannte Warnung beziehungsweise die genannte Abweisung kurzfristig unterdrückt wird.

Erfindungsgemäss wird damit erreicht, dass die Entscheidungshoheit, eine Gesetzesübertretung zu begehen, an den Fahrer des Kraftfahrzeugs übertragen wird. Auf diese Weise kann dieser unter Umständen eine Gefahrensituation abwenden. Beispiele für solche Gefahrensituationen sind:
- Von hinten nähert sich ein Fahrzeug ungebremst mit hoher Geschwindigkeit.
- Herannahender Querverkehr würde bei Beibehaltung der Geschwindigkeit mit dem hinteren Teil des Fahrzeugs kollidieren.
- Bei einem eingeleiteten Überholmanöver zeichnet sich ab, dass dieses ohne Überschreitung der erlaubten Höchstgeschwindigkeit nicht ohne Kollision mit dem Gegenverkehr beenden lässt.
- Bei einem Fahrzeuginsassen tritt ein medizinischer Notfall ein.

In solch einer Situation ist es wenig sinnvoll, dass die erlaubte Höchstgeschwindigkeit unter allen Umständen eingehalten wird, beziehungsweise steht der damit erzielte Nutzen (Abwenden einer Gefahr von Leib und Leben) in grobem Missverhältnis zu einem Schaden (Begehen einer Verwaltungsübertretung). Bestehende Fahrerassistenzsysteme können diese Entscheidungen in aller Regel nicht treffen. Die erfindungsgemässe Lösung stellt somit einen massgeblichen Fortschritt dar.

Selbstverständlich bezieht sich die Erfindung sowohl auf Kraftfahrzeuge mit einer Verbrennungskraftmaschine als auch auf Fahrzeuge mit einem elektrischen Antrieb. Weiterhin bezieht sich die Erfindung auf Geschwindigkeitsbegrenzungssysteme, bei denen eine dem Fahrer eine Überschreitung der erlaubten Höchstgeschwindigkeit bloss mitgeteilt wird und nicht aktiv in die Fahrzeugsteuerung eingegriffen wird (ahnende Systeme) und auf Geschwindigkeitsbegrenzungssysteme, welche aktiv in die Fahrzeugsteuerung eingreifen, also beispielsweise die Motorleitung auch ohne Zutun des Fahrers begrenzen oder reduzieren (eingreifende Systeme). Selbstverständlich ist auch eine Kombination beider Vorgangsweisen möglich.

Die Warnung an den Fahrer bezüglich des Überschreitens einer erlaubten Höchstgeschwindigkeit kann optisch, beispielsweise durch eine Anzeige oder eine Warnlampe, und/oder akustisch, beispielsweise durch eine Ansage oder ein Warnsignal, erfolgen. Ein steuernder Eingriff erfolgt vorzugsweise um die Motorleistung zu begrenzen oder zu reduzieren, kann aber auch aktiv auf eine Bremse des Fahrzeugs wirken.

Die Erfassung der erlaubten Höchstgeschwindigkeit erfolgt vorzugsweise über eine Positionsbestimmung des Fahrzeugs mittels GPS (Global Positioning System) in Verbindung mit einer Datenbank, in welcher eine erlaubte Höchstgeschwindigkeit zu einer Position zugeordnet sind. Diese Datenbank kann fahrzeugintern oder fahrzeugextern sein. Neben GPS-basierten Systemen sind aber auch andere Systeme denkbar, welche die erlaubte Höchstgeschwindigkeit durch optische Erfassung von Verkehrszeichen oder aber auch durch Empfang entsprechender Funksignale ermitteln.

Generell kann die für die genannte Warnung beziehungsweise die genannte Abweisung als Basis dienende Höchstgeschwindigkeit etwas höher sein, als die ermittelte Höchstgeschwindigkeit, sodass eine geringfügige Überschreitung der erlaubten Höchstgeschwindigkeit (zum Beispiel um 5 km/h) stets möglich ist. Anstelle der gesetzlich erlaubten Höchstgeschwindigkeit ist in den Ansprüchen und der zugeordneten Beschreibung dann gedanklich eine dauernd mögliche Höchstgeschwindigkeit als Basis für die genannte Warnung beziehungsweise die genannte Abweisung einzusetzen.

Vorteilhafte Ausgestaltungen und Weiterbildungen der Erfindung sind in den Unteransprüchen sowie in der Beschreibung in Zusammenschau mit den Figuren offenbart.

Günstig ist es, wenn die genannte Warnung beziehungsweise die genannte Abweisung während einer ersten vorgebbaren Zeitspanne unterdrückt wird. Bei dieser Variante der Erfindung kann eine bestimmte erste Zeitspanne eingestellt werden, während der eine Überschreitung der erlaubten Höchstgeschwindigkeit vom Geschwindigkeitsbegrenzungssystem ignoriert wird beziehungsweise zu keinem Eingriff führt. Beispielsweise kann eine Zeit, welche gewöhnlich zum Abwenden einer der vorgenannten Gefahrensituation nötig ist, vorgesehen sein, beispielsweise 30 Sekunden.

Vorteilhaft ist es, wenn eine Unterdrückung der genannten Warnung beziehungsweise der genannten Abweisung nach Ablauf der ersten Zeitspanne während einer zweiten Zeitspanne unterbleibt. Auf diese Weise wird verhindert, dass es zu häufigen beziehungsweise quasi-permanenten Geschwindigkeitsüberschreitungen kommt. Beispielsweise kann vorgesehen sein, dass nach einer erfolgten Geschwindigkeitsüberschreitung erst nach zum Beispiel 60 Sekunden eine erneute Geschwindigkeitsüberschreitung möglich ist.

Vorteilhaft ist es weiterhin, wenn die erste Zeitspanne und/oder die zweite Zeitspanne und/oder eine Höhe einer möglichen Geschwindigkeitsüberschreitung anhand von Parametern des Kraftfahrzeugs vorgegeben werden. Bei dieser Variante der Erfindung werden die Zeitspannen variabel gestaltet. Beispielsweise kann eine Lenkwinkeländerung nach links ein Überholmanöver indizieren, insbesondere wenn zuvor zurückgeschalten wurde. Wird dagegen ein plötzliches Gasgeben ohne Schaltmanöver erkannt, so kann dies ein Anzeichen für ein "Fluchtverhalten" des Fahrers, beispielsweise vor nachfolgendem Verkehr, anzeigen. In einer solchen Situation ist der Fahrer in aller Regel so auf das Ereignis konzentriert, dass er auf ein Zurückschalten verzichtet bzw. ein solches "vergisst". Für verschiedene Situationen können nun verschiedene Zeitspannen vorgesehen werden. Insbesondere kann die Zeitspanne aber auch geschwindigkeitsabhängig vorgesehen werden, weil ein Überholmanöver bei höherer Geschwindigkeit wegen der verminderten Leistungsreserve des Fahrzeugs in aller Regel länger dauert als bei niedriger Geschwindigkeit. Generell ist unter einer "Vorgabe einer Höhe einer möglichen Geschwindigkeitsüberschreitung" selbstverständlich auch eine Vorgabe einer temporär möglichen Maximalgeschwindigkeit zu verstehen.

Besonders vorteilhaft ist es, wenn die die erste Zeitspanne und/oder die zweite Zeitspanne und/oder eine Höhe einer möglichen Geschwindigkeitsüberschreitung abhängig von einer Fahrtrichtung vorgegeben wird. Bei dieser Variante der Erfindung hängt die Dauer der ersten und/oder zweiten Zeitspanne also davon ab, in welcher Fahrtrichtung ein Streckenabschnitt befahren wird. Schliesst sich an die momentane Position ein gerader Streckenabschnitt an, so kann eine längere erste Zeitspanne vorgegeben werden, schliesst sich ein kurvenreicher Abschnitt an die momentane Position an, dementsprechend eine kürzere erste Zeitspanne.

Besonders vorteilhaft ist es zudem, wenn die erste Zeitspanne und/oder die zweite Zeitspanne und/oder eine Höhe einer möglichen Geschwindigkeitsüberschreitung abhängig von einer Uhrzeit vorgegeben werden. Beispielsweise kann vorgesehen sein, dass die erste Zeitspanne während der Nachtstunden kürzer ist als untertags. Vorteilhaft ist es auch, wenn die genannte Warnung beziehungsweise die genannte Abweisung nach Quittierung einer über Funk abgesetzten Anfrage unterdrückt wird. Hier kann der Fahrer aktiv eine Anfrage zur Überschreitung der erlaubten Höchstgeschwindigkeit an zum Beispiel eine behördliche Stelle absetzen, beispielsweise weil bei einem der Insassen ein medizinischer Notfall vorliegt. Die behördliche Stelle kann dann nach eigenem Ermessen eine solche Erlaubnis erteilen oder verweigern, indem eine entsprechende Antwort an das Fahrzeug abgesetzt wird. Vorteilhaft kann auf diese Weise auch eine relativ lange erste Zeitspanne vorgesehen werden, beispielsweise eine Stunde.

Weiterhin ist es vorteilhaft, wenn die genannte Unterdrückung nur dann erfolgt, wenn vor und/oder während der Überschreitung der erlaubten Höchstgeschwindigkeit eine Eingabe seitens des Fahrers erfolgt. Bei dieser Variante der Erfindung muss der Fahrer aktiv anzeigen, dass er die erlaubte Höchstgeschwindigkeit überschreiten möchte, beispielsweise durch Drücken einer dafür vorgesehenen Taste oder durch Eingabe eines entsprechenden Sprachbefehls. Auf diese Weise wird verhindert, dass der Fahrer eine Geschwindigkeitsübertretung unbewusst begeht.

Eine vorteilhafte Variante der Erfindung ist auch gegeben, wenn:
- die Unterdrückung der genannten Warnung beziehungsweise der genannten Abweisung aufgehoben und/oder
- die erste Zeitspanne verkürzt und/oder
- die zweite Zeitspanne verlängert und/oder
- eine Höhe einer möglichen Geschwindigkeitsüberschreitung gesenkt wird, wenn ein vom Fahrzeug abgehendes Telefongespräch detektiert wird.

Hier wird überwacht, ob der Fahrer ein Telefongespräch führt oder führen möchte. Da ein Abfall der Konzentration des Fahrers zu erwarten ist, wird die Unterdrückung der genannten Warnung beziehungsweise der genannten Abweisung aufgehoben oder verkürzt.

Eine weitere vorteilhafte Variante der Erfindung ist auch gegeben, wenn:
- die Unterdrückung der genannten Warnung beziehungsweise der genannten Abweisung aufgehoben und/oder
- die erste Zeitspanne verkürzt und/oder
- die zweite Zeitspanne verlängert und/oder
- eine Höhe einer möglichen Geschwindigkeitsüberschreitung gesenkt wird, wenn eine zugeordnete Anforderung über ein fahrzeugexternes Funknetz empfangen wird.

Bei dieser Variante der Erfindung führt ein eingehender Funkbefehl dazu, dass eine Überschreitung der Höchstgeschwindigkeit verweigert wird. Beispielsweise kann ein solcher Funkbefehl von einem Einsatzfahrzeug (z.B. Polizei, Rettung oder Feuerwehr) in der Umgebung oder auch einer behördlichen Stelle zur Überwachung und Leitung des Verkehrs abgesetzt werden. Denkbar wäre beispielsweise auch, dass etwa Verkehrsschilder zur Anzeige einer Baustelle oder Gefahrenstelle mit einem solchen Sender ausgestattet werden. Als fahrzeugexternes Funknetz kann beispielsweise ein Mobilfunknetz dienen.

Eine weitere vorteilhafte Variante der Erfindung ist darüber hinaus gegeben, wenn:
- die Unterdrückung der genannten Warnung beziehungsweise der genannten Abweisung aufgehoben und/oder
- die erste Zeitspanne verkürzt und/oder
- die zweite Zeitspanne verlängert und/oder
- eine Höhe einer möglichen Geschwindigkeitsüberschreitung gesenkt wird, wenn eine vorgebbare Verhaltensweise des Fahrers detektiert wird.

Bei dieser Variante wird das Verhalten des Fahrers analysiert, beispielsweise kann seine Aufmerksamkeit beziehungsweise Müdigkeit durch Analyse der Lidschläge ermittelt werden. Wird nun beispielsweise erkannt, dass der Fahrer müde ist, so wird eine Überschreitung der Höchstgeschwindigkeit verweigert. Denkbar wäre zum Beispiel auch, dass die Überschreitung der Höchstgeschwindigkeit verboten wird, wenn erkannt wird, dass der Fahrer emotional sehr aufgeregt ist. Dies kann beispielsweise durch Erfassung der Gesprächslautstärke im Innenraum des Fahrzeugs erfolgen.

Eine besonders vorteilhafte Ausgestaltung der Erfindung ergibt sich weiterhin, wenn die Begrenzungsmittel an eine Diagnose-Schnittstelle des Fahrzeugs angeschlossen sind. Auf diese Weise kann die Vorrichtung zur Begrenzung der Geschwindigkeit sehr leicht in einem Kraftfahrzeug integriert werden. Insbesondere kann das System so auch leicht für bestehende Fahrzeuge nachgerüstet werden, die eine Schnittstelle für eine On-Board-Diagnose (OBD) zur Verfügung stellen. Diese Schnittstelle erlaubt insbesondere Zugriff zur Motorsteuerung und der Gemischbildung, wodurch die vom Motor abgegebene Leistung im Bedarfsfall von den Begrenzungsmitteln begrenzt beziehungsweise reduziert werden kann.

Eine weitere besonders vorteilhafte Ausgestaltung der Erfindung ergibt sich, wenn die Begrenzungsmittel eine Eingangsschnittstelle und eine Ausgangsschnittstelle umfasst, wobei die Eingangsschnittstelle zur Verbindung der Begrenzungsmittel mit einem elektronischen Gaspedal und die Ausgangsschnittstelle zur Verbindung der Begrenzungsmittel mit einer Steuerung zur Veränderung der Motorleistung verbunden ist. Auf diese Weise kann die erfindungsgemässe Vorrichtung auch in Fahrzeuge eingebaut beziehungsweise für diese nachgerüstet werden, welche keine Diagnose-Schnittstelle, jedoch ein elektronisches Gaspedal aufweisen. Bei einem elektronischen Gaspedal wird die Pedalstellung ermittelt, beispielsweise mit Hilfe eines Potentiometers, und diese als elektronisches Signal an eine Motorsteuerung übermittelt. Beispielsweise kann so eine Drosselklappe und eine Einspritzpumpe einer Verbrennungskraftmaschine oder ein Fahrwechselrichter eines Elektrokraftfahrzeugs angesteuert werden. Die Begrenzungsmittel empfangen nun über die Eingangsschnittstelle die Stellung des Gaspedals und leiten diese Information, gegebenenfalls modifiziert um die Motorleistung zu begrenzen oder zu reduzieren, über die Ausgangsschnittstelle an die Motorsteuerung.

Vorteilhaft ist es auch, wenn die Begrenzungsmittel dazu eingerichtet sind, die Speisespannung eines Potentiometers eines elektronischen Gaspedals zu verändern. Die meisten elektronischen Gaspedale in der Automobilbranche funktionieren nach dem Prinzip, dass die Stellung des Pedals mit Hilfe eines Potentiometers ermittelt wird. Sehr häufig werden zwei Potentiometer (jeweils mit Masse und +5 V verbunden) mit unterschiedlichen Widerstandswerten bei der Betätigung des Gaspedals synchron verändert. Auf den beiden Mittelabgriffen stehen somit zwei Spannungen zur Verfügung, die zueinander in einem konstanten, negativen Verhältnis stehen. Zusätzlich befindet beim Mittelabgriff eines Potentiometers eine Überwachungsschaltung, welche den korrekten Anschluss aller notwendigen Komponenten überprüft und im Fehlerfall einen Notbetrieb aktiviert, in dem nur noch die halbe Maximalbeschleunigung des Fahrzeugs ermöglicht wird. Die Begrenzungsmittel verändern nun die Speisespannung des Potentiometers oder der Potentiometer des Gaspedals, wodurch auch die Spannung am Mittelabgriff des Potentiometers oder an den Mittelabgriffen der Potentiometer, welche die gewünschte Leistungsabgabe des Motors repräsentiert/repräsentieren, verändert wird.

In einer weiteren vorteilhaften Ausführung der Erfindung sind die Begrenzungsmittel derart ausgebildet, dass die Steuerung beziehungsweise die Schaltung aus dem gleichen Widerstandsgebilde wie das Gaspedal besteht, jedoch mit veränderbaren Widerständen , da bei der Betätigung des Gaspedals sich die Potentiometer und somit das elektrische Signal verändern. Unter dem Begriff Widerstandsgebilde wird in diesem Zusammenhang eine spezielle Anordnung von Widerständen unterschiedlicher Werte verstanden. Mit dieser Lösung lassen sich in einfacher Weise Unterschiede bei den Steuerungen verschiedener Fahrzeughersteller ausgleichen. Die Widerstände werden beziehungsweise das Widerstandsgebilde wird auf den entsprechenden Fahrzeugtyp abgeglichen und vorteilhaft versiegelt. Beispielsweise mit einem elektronischen Schalter kann zwischen Widerstandsgebilde des Gaspedals und den Widerstandsgebilden der Steuerung geswicht bzw. umgeschaltet werden. Bei einer Überschreitung der zulässigen Höchstgeschwindigkeit, z. B. wenn jemand mit 80 km/h Innerorts unterwegs ist, schaltet der Schalter beispielsweise auf Standgas und mit dem Gaspedal kann dann nicht mehr eingegriffen werden, bis das Fahrzeug die für diesen Verkehrsabschnitt zulässige Höchstgeschwindigkeit erreicht hat. Besonders vorteilhaft an dieser Lösung ist deren Sicherheit, da bei einem Ausfall des Systems das Fahrzeug nicht selbständig Gas geben kann. Damit eine dynamische Regelung gewährleistet ist, werden vorteilhaft mehrere Widerstandsgebilde vorgesehen, welche auf die jeweiligen Drehzahlen abgeglichen werden.

Schliesslich ergibt sich eine besonders vorteilhafte Ausgestaltung der Erfindung, wenn die Begrenzungsmittel einen Servomotor umfasst, welcher mit einer Drosselklappe und/oder einem Gaspedal verbunden ist. Auf diese Weise kann die erfindungsgemässe Vorrichtung auch in Fahrzeuge eingebaut beziehungsweise für diese nachgerüstet werden, welche kein elektronisches Gaspedal aufweisen. Beispielsweise kann mit dem Servomotor ein Gegendruck auf das Gaspedal ausgeübt werden, wenn die Motorleistung reduziert oder begrenzt werden soll. Denkbar ist auch, dass der Servomotor die Drosselklappe im Bedarfsfall etwas schliesst, ohne das Gaspedal zu beeinflussen.

An dieser Stelle wird angemerkt, dass die Möglichkeiten zur Integration der Begrenzungsmittel in ein Fahrzeug auch unabhängig von den Merkmalen der unabhängigen Patentansprüche und somit auch bei Vorliegen einer Geschwindigkeitsbegrenzung ohne Möglichkeit zur temporären Überschreitung einer erlaubten Höchstgeschwindigkeit eine Erfindung darstellen können.

Weiterhin wird angemerkt, dass sich die im Bezug auf das erfindungsgemässe Verfahren genannten Varianten und daraus resultierenden Vorteile gleichermassen auf die erfindungsgemässe Vorrichtung beziehen und umgekehrt.

Die obigen Ausgestaltungen und Weiterbildungen der Erfindung lassen sich auf beliebige Art und Weise kombinieren.

Die vorliegende Erfindung wird nachfolgend anhand der in den schematischen Figuren der Zeichnung angegebenen Ausführungsbeispiele näher erläutert. Es zeigen dabei:
- Fig. 1: schematisch die Struktur der erfindungsgemässen Vorrichtung und
- Fig. 2: ein beispielhaftes Geschwindigkeits-Zeit-Diagramm.

In den Figuren der Zeichnungen sind gleiche und ähnliche Teile mit gleichen Bezugszeichen und funktionsähnliche Elemente und Merkmale - sofern nichts Anderes ausgeführt ist - mit gleichen Bezugszeichen aber unterschiedlichen Indizes versehen.

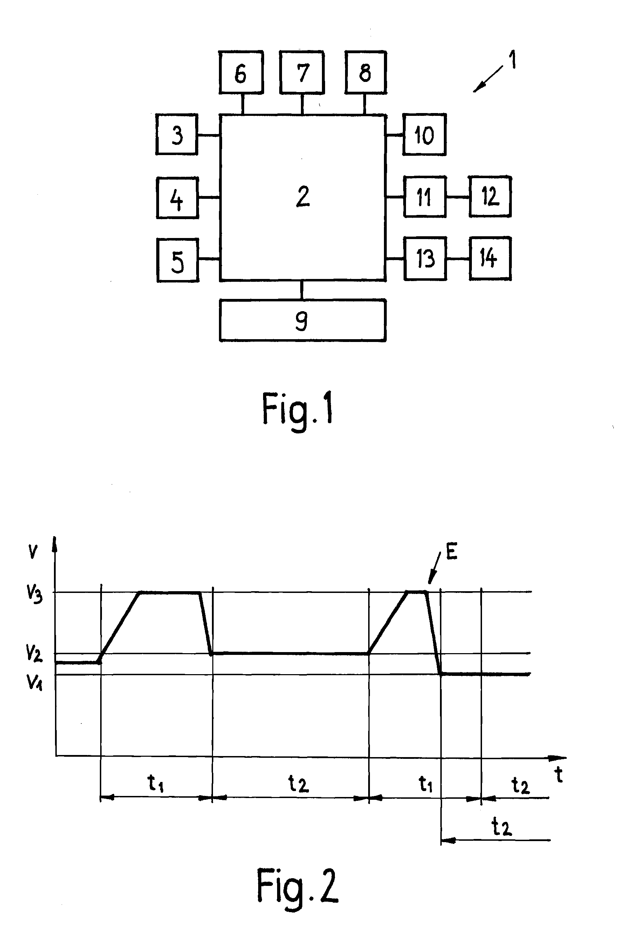

Fig. 1 zeigt schematisch die Struktur einer beispielhaften, erfindungsgemässen Vorrichtung 1. Diese umfasst eine zentrale Steuereinheit 2, sowie mehrere daran angeschlossene Komponenten. Das sind: eine Spannungsversorgung 3, einen Taktgenerator 4, eine Schnittstelle 5 zur Programmierung der zentralen Steuereinheit 2, ein Eingabemedium 6 (z.B. eine Taste), eine Ausgabeeinheit 7 (z.B. eine Anzeige, eine Signallampe oder ein Lautsprecher), eine Funkschnittstelle 8 (z.B. eine GSM-Mobilfunkschnittstelle), ein Modul 9 zur Ermittlung der erlaubten Höchstgeschwindigkeit, einen Servomotor 10, eine ISO 9141-Schnittstelle 11 zu einem OBD-System 12 des Fahrzeugs, sowie zwei Digitalpotentiometer 13, welche mit einem elektronischen Gaspedal 14 verbunden sind.

Fig. 2 zeigt ein beispielhaftes Geschwindigkeits-Zeit-Diagramm. Auf der Ordinate ist dabei die Geschwindigkeit v, auf der Abszisse die Zeit t aufgetragen. Im Diagramm sind drei verschiedene Geschwindigkeitsniveaus dargestellt, nämlich eine gesetzlich erlaubte Höchstgeschwindigkeit v₁, eine generell vom System vorgegebene, dauerhaft mögliche Höchstgeschwindigkeit v₂, sowie eine vom System vorgegebene, temporär mögliche Höchstgeschwindigkeit v₃. Darüber hinaus sind in der Fig. 2 eine erste Zeitspanne t₁, eine zweite Zeitspanne t₂, sowie ein Ereignis E dargestellt.

Die Funktion der in der Fig. 1 gezeigten Anordnung wird nun anhand des in der Fig. 2 dargestellten Diagramms näher erläutert:

Vom Modul 9 wird Position des Fahrzeugs über einen GPS-Empfänger ermittelt und anschliessend die erlaubte Höchstgeschwindigkeit v₁ aus einer Datenbank im Modul 9 ausgelesen. Diese wird an die zentrale Steuereinheit 2 übermittelt, welche daraus die dauerhaft mögliche Höchstgeschwindigkeit v₂ ermittelt. Beispielsweise kann diese 5 km/h über der gesetzlich erlaubten Höchstgeschwindigkeit v₁ liegen. Denkbar ist natürlich auch, dass v₁ und v₂ identisch sind.

Je nach Ausführungsform gibt die zentrale Steuereinheit 2 eine Warnung über die Ausgabeeinheit 7 aus, wenn die dauerhaft mögliche Höchstgeschwindigkeit v₂ überschritten wird, oder weist eine Anforderung ab, die dauerhaft mögliche Höchstgeschwindigkeit v₂ zu überschreiten. Die gewünschte Arbeitsweise kann beispielsweise per Schalter oder Auswahlmenü festgelegt werden.

Für die genannte Abweisung, welche einen Eingriff in die Fahrzeugsteuerung darstellt, stehen mehrere Möglichkeiten offen, die ebenfalls per Schalter oder Auswahlmenü ausgewählt werden können.
1) Eingriff über den Servomotor 10, welcher mit einer Drosselklappe und/oder einem Gaspedal verbunden ist. Beispielsweise kann mit dem Servomotor ein Gegendruck auf das Gaspedal ausgeübt werden, wenn die Motorleistung reduziert oder begrenzt werden soll. Denkbar ist auch, dass der Servomotor die Drosselklappe im Bedarfsfall etwas schliesst, ohne das Gaspedal zu beeinflussen. Auf diese Weise kann die erfindungsgemässe Vorrichtung auch in Fahrzeuge eingebaut beziehungsweise für diese nachgerüstet werden, welche kein elektronisches Gaspedal aufweisen.
2) Eingriff über die Veränderung der Speisespannung eines Potentiometers eines elektronischen Gaspedals. Die meisten elektronischen Gaspedale im Automobilbau funktionieren nach dem Prinzip, dass die Stellung des Pedals mit Hilfe eines Potentiometers ermittelt wird und die Spannung am Mittelabgriff die gewünschte Leistungsabgabe des Motors repräsentiert. Sehr häufig werden zwei Potentiometer mit unterschiedlichen Widerstandswerten bei der Betätigung des Gaspedals synchron verändert. Wird nun die Speisespannung des Potentiometers des Gaspedals verändert, ändert sich auch die Spannung am Mittelabgriff des Potentiometers, welche die gewünschte Leistungsabgabe des Motors repräsentiert. In der Fig. 1 wird dies mit den Digitalpotentiometern 13 bewerkstelligt, denkbar wäre aber beispielsweise auch, dass hierfür Digital-Analog-Wandler eingesetzt werden.
3) Eingriff über ein Modul, umfassend eine Eingangsschnittstelle und eine Ausgangsschnittstelle, wobei die Eingangsschnittstelle zur Verbindung der Begrenzungsmittel mit einem elektronischen Gaspedal und die Ausgangsschnittstelle zur Verbindung der Begrenzungsmittel mit einer Steuerung zur Veränderung der Motorleistung verbunden ist (nicht dargestellt). Bei dieser Variante wird das Signal, welches die Stellung des Gaspedals repräsentiert, verändert. Ist dieses Signal ein Spannungssignal, so kann dies beispielsweise über einen Analog-Digital-Wandler von der zentralen Steuereinheit 2 empfangen, modifiziert und anschliessend über einen Digital-Analog-Wandler an die Motorsteuerung übermittelt werden.
4) Eingriff über die ISO 9141-Schnittstelle 11 zum OBD-System 12 des Fahrzeugs. Diese Schnittstelle erlaubt insbesondere Zugriff zur Motorsteuerung und der Gemischbildung, wodurch die vom Motor abgegebene Leistung im Bedarfsfall von den Begrenzungsmitteln begrenzt beziehungsweise reduziert werden kann. Auf diese Weise kann die erfindungsgemässe Vorrichtung 1 leicht für bestehende Fahrzeuge nachgerüstet werden, welche über ein OBD-System verfügen.

An dieser Stelle wird angemerkt, dass die Möglichkeiten 1) bis 4) zur Integration der Begrenzungsmittel in ein Fahrzeug auch unabhängig von den Merkmalen der unabhängigen Patentansprüche und somit auch bei Vorliegen einer Geschwindigkeitsbegrenzung ohne Möglichkeit zur temporären Überschreitung einer erlaubten Höchstgeschwindigkeit eine Erfindung darstellen können.

Wie in Fig. 2 deutlich zu sehen ist, wird eine kurzfristige Überschreitung der möglichen Höchstgeschwindigkeit v₂ erlaubt, und zwar dadurch, dass die genannte Warnung beziehungsweise die genannte Abweisung kurzfristig unterdrückt wird. Auf diese Weise kann unter Umständen eine Gefahrensituation abgewendet werden. Beispielsweise kann der Abstand zu einem Fahrzeug, das sich von hinten mit hoher Geschwindigkeit nähert, erhöht werden. Zudem kann beispielsweise auch der Überholweg bei einem Überholmanöver verkürzt werden.

Konkret bewegt sich das Fahrzeug zu Beginn etwas über der erlaubten Höchstgeschwindigkeit v₁ und wird dann beschleunigt, sodass die dauerhaft mögliche Höchstgeschwindigkeit v₂ überschritten wird. In Fig. 2 wird davon ausgegangen, dass die Vorrichtung 1 in die Fahrzeugsteuerung eingreift und ein Überschreiten der temporär möglichen Höchstgeschwindigkeit v₃ unterbindet. Denkbar ist natürlich auch die blosse Ausgabe eines Warnhinweises.

Nach einer ersten Zeitspanne t₁ wird die Motorleistung durch die Vorrichtung 1 so reduziert, dass das Fahrzeug in Folge mit maximal der dauerhaft möglichen Höchstgeschwindigkeit v₂ weiterbewegt werden kann. Erst nach Ablauf einer zweiten Zeitspanne t₂ ist eine erneute Überschreitung der dauerhaft möglichen Höchstgeschwindigkeit v₂ erlaubt um quasi-permanenten Geschwindigkeitsüberschreitungen vorzubeugen.

Kurz nach der erneuten Geschwindigkeitsüberschreitung tritt ein Ereignis E ein, welches hier die Aufhebung der Unterdrückung der genannten Warnung beziehungsweise der genannten Abweisung zur Folge hat. Demgemäss wird das Fahrzeug schon vor Ablauf der ersten Zeitspanne t₁ auf die Geschwindigkeit v₂ gebracht.

Ein solches Ereignis kann beispielsweise
- die Detektion eines über die Funkschnittstelle 8 vom Fahrzeug abgehenden Telefongesprächs (reduziert die Aufmerksamkeit des Fahrers) und/oder
- der Empfang einer vordefinierten Anforderung über ein fahrzeugexternes Funknetz beziehungsweise über die Funkschnittstelle 8 (beispielsweise von einem Einsatzfahrzeug) und/oder
- die Detektion wenn einer vorgebbaren Verhaltensweise des Fahrers (z.B. ist der Fahrer müde oder emotional aufgeregt) sein.

Alternativ ist bei Eintreten des Ereignisses E auch vorstellbar, dass
- die erste Zeitspanne t₁ bei Eintreten des Ereignisses verkürzt und/oder
- die zweite Zeitspanne t₂ verlängert und/oder
- eine Höhe einer möglichen Geschwindigkeitsüberschreitung v₃-v₂ gesenkt wird.

Eine weitere Geschwindigkeitsüberschreitung ist dann erst nach Ablauf der zweiten Zeitspanne t₂ möglich, welche an die erste Zeitspanne t₁ angrenzt (obere Variante) oder direkt an das Ereignis E, insbesondere an dessen Ende angrenzt. Selbstverständlich wäre auch vorstellbar, dass eine erneute Geschwindigkeitsüberschreitung direkt nach dem Ende des Ereignisses E erlaubt wird.

In einer vorteilhaften Variante der Erfindung wird die erste Zeitspanne t₁ und/oder die zweite Zeitspanne t₂ und/oder eine Höhe einer möglichen Geschwindigkeitsüberschreitung v₃-v₂:
- anhand von Parametern des Kraftfahrzeugs (beispielsweise geschwindigkeitsabhängig) und/oder
- abhängig von einer Fahrtrichtung des Fahrzeugs (z.B. je nachdem ob der momentanen Position des Fahrzeugs ein gerader oder kurvenreicher Streckenabschnitt folgt) und/oder
- abhängig von einer Uhrzeit vorgegeben.

In einer weiteren Variante erfolgt die genannte Unterdrückung nur dann, wenn vor und/oder während der Überschreitung der erlaubten Höchstgeschwindigkeit v₂ eine Eingabe seitens des Fahrers über das Eingabemedium 6 erfolgt. Bei dieser Variante der Erfindung muss der Fahrer aktiv anzeigen, dass er die erlaubte Höchstgeschwindigkeit überschreiten möchte, um zu verhindern, dass der Fahrer eine Geschwindigkeitsübertretung unbewusst begeht.

Schliesslich ist es auch vorteilhaft, wenn die genannte Warnung beziehungsweise die genannte Abweisung nach Quittierung einer über die Funkschnittstelle 8 abgesetzten Anfrage unterdrückt wird. Hier kann der Fahrer aktiv eine Anfrage zur Überschreitung der erlaubten Höchstgeschwindigkeit an eine zum Beispiel eine behördliche Stelle absetzen, beispielsweise weil bei einem der Insassen ein medizinischer Notfall vorliegt. Die behördliche Stelle kann dann nach eigenem Ermessen eine solche Erlaubnis erteilen oder verweigern, indem eine entsprechende Antwort an das Fahrzeug abgesetzt und über die Funkschnittstelle 8 empfangen wird. Vorteilhaft kann auf diese Weise auch eine relativ lange erste Zeitspanne t₁ vorgesehen werden, beispielsweise eine Stunde.

Im Folgenden wird eine konkret realisierte aber dennoch rein beispielhafte Ausführungsform der Erfindung erläutert.

Die zentrale Steuerung 2 wurde dabei durch eine Mikrokontroller ATmega162 gebildet, welcher die Speisespannung eines elektronischen Gaspedals 14 mit Hilfe zweier Digitalpotentiometer 13 verändern und solcherart die Geschwindigkeit des Fahrzeugs begrenzen kann.

Das Modul 9 zur Ermittlung der erlaubten Höchstgeschwindigkeit wurde durch ein standardmässiges PC-Board realisiert, welches über eine RS232 Schnittstelle mit der zentralen Steuerung 2 verbunden wurde. Konkret wurde das Embedded PC-Board Alix 3d2 mit einem 500Mhz AMD Geode LX800 Prozessor, 256 MB DDR DRAM und verschiedenen Anschlüssen (DB9, 2 x USB, miniPCI und LC Bus) eingesetzt.

Die Software für das PC-Board wurde mit der Programmsprache Phyton erstellt. Diese dient dazu, die erlaubte Höchstgeschwindigkeit v₁ anhand einer Datenbank und anhand von GPS-Koordinaten des Fahrzeugs ermitteln. Dabei werden zuerst die GPS-Daten ermittelt, und anschliessend wird in der Datenbank die passende Datei dazu gesucht. In einer solchen Datei stellt jede Zeile einen bestimmten Strassenabschnitt dar, wobei am Anfang einer Zeile erlaubte Höchstgeschwindigkeit v₁ oder die dauernd mögliche Höchstgeschwindigkeit v₂ sowie optional die temporär mögliche Höchstgeschwindigkeit v₃ gefolgt von den Koordinaten gespeichert ist. Vorteilhaft werden für die Koordinaten Projektionskoordinaten verwendet, wodurch sind sich Distanzen durch einfache trigonometrische Funktionen berechnen lassen. Alternativ kann beispielsweise auch das UTM Koordinatensystem (Universal Transverse Mercator) genutzt werden.

Als GPS-Modul wurde das Global Sat (BR-355) mit einer aktiven Patchantenne eingesetzt, wodurch eine hohe Genauigkeit bei der Positionsbestimmung erzielt werden kann.

Das Modul wurde über einen PS2-Anschluss mit dem PC-Board verbunden.

Das Kartenmaterial beziehungsweise die Datenbank wird auf einer 8GB grossen CF Speicherkarte gespeichert, die direkt auf dem Board eingesteckt wird. Um das Kartenmaterial laufend aktualisieren zu können, wurde eine Wirelesskarte mit externer Antenne über eine miniPCI-Schnittstelle mit dem PC-Board verbunden. Über zum Beispiel öffentliche Wirelessnetze kann das Kartenmaterial, mit dessen Hilfe die erlaubte Höchstgeschwindigkeit v₁ oder die dauernd mögliche Höchstgeschwindigkeit v₂ sowie optional die temporär mögliche Höchstgeschwindigkeit v₃ ermittelt wird, aktualisiert werden. Um Manipulationen weitgehend zu verhindern, wurde die Updatefunktion mit 128 Bit verschlüsselt. Denkbar wäre natürlich auch, das Kartenmaterial durch autorisierte Werkstätten zu aktualisieren

Prinzipiell kann die Geschwindigkeit des Fahrzeugs mit Hilfe der GPS-Koordinaten ermittelt werden. Herkömmliche GPS-Module sind allerdings in aller Regel zu träge, um die beim Beschleunigen des Fahrzeugs auftretenden Geschwindigkeiten in hinreichender Genauigkeit und schnell genug wiederzugeben. Vorteilhaft wird die erfindungsgemässe Vorrichtung 1 daher mit einem OBD-System 12 des Fahrzeugs verbunden. Denkbar wäre auch eine Ermittlung über einen Drehzahlmesser an der Tachowelle.

Weiterhin wurde eine optionale Anzeige 7 an das PC-Board angeschlossen, welche den Fahrer mit systemrelevanten Daten informiert. Das sind beispielsweise die Momentangeschwindigkeit des Fahrzeugs, die erlaubte Höchstgeschwindigkeit v₁, die Höhe der möglichen Geschwindigkeitsüberschreitung v₃-v₁, die verbleibende Dauer, während der eine solche Überschreitung möglich ist (erste Zeitspanne t₁) sowie die Dauer bis zur nächsten möglichen Überschreitung (zweite Zeitspanne t₂). Denkbar wäre natürlich auch, die Anzeige wie in Fig. 2 dargestellt an die zentrale Steuereinheit 2 anzuschliessen.

Generell wird angemerkt, dass die erfindungsgemässe Vorrichtung 1 nicht zwangsläufig alle in Fig. 1 dargestellten Bauelemente aufweisen muss, beziehungsweise weitere, nicht dargestellte Bauelemente umfassen kann. Es liegt daher im Ermessen des Fachmannes, nicht benötigte Einheiten wegzulassen beziehungsweise benötigte Elemente hinzuzufügen. Weiterhin wird angemerkt, dass einzelne Merkmale auch die Basis für eine unabhängige Erfindung bilden können.

### Bezugszeichenliste

- 1: erfindungsgemässen Vorrichtung
- 2: zentrale Steuereinheit
- 3: Spannungsversorgung
- 4: Taktgenerator
- 5: Schnittstelle zur Programmierung der zentralen Steuereinheit
- 6: Eingabemedium
- 7: Ausgabeeinheit
- 8: Funkschnittstelle
- 9: Modul zur Ermittlung der erlaubten Höchstgeschwindigkeit
- 10: Servomotor
- 11: ISO 9141-Schnittstelle
- 12: OBD-System des Fahrzeugs
- 13: Digitalpotentiometer
- 14: elektronisches Gaspedal
- E: Ereignis
- t: Zeit
- t₁: erste Zeitspanne
- t₂: zweite Zeitspanne
- v: Geschwindigkeit
- v₁: gesetzlich erlaubte Höchstgeschwindigkeit
- v₂: dauernd mögliche Höchstgeschwindigkeit
- v₃: temporär mögliche Höchstgeschwindigkeit

## Patentansprüche

1. Verfahren zur Begrenzung der Geschwindigkeit eines Kraftfahrzeugs, bei dem die erlaubte Höchstgeschwindigkeit (v₁) auf einem Streckenabschnitt, auf dem sich das Kraftfahrzeug befindet, ermittelt wird und eine Ausgabe einer Warnung erfolgt, wenn die erlaubte Höchstgeschwindigkeit (v₁) überschritten wird oder eine Anforderung, die erlaubte Höchstgeschwindigkeit (v₁) zu überschreiten, abgewiesen wird, **dadurch gekennzeichnet, dass**
die genannte Warnung beziehungsweise die genannte Abweisung kurzfristig unterdrückt wird.

2. Verfahren nach Anspruch 1, **dadurch gekennzeichnet, dass** die genannte Warnung beziehungsweise die genannte Abweisung während einer ersten vorgebbaren Zeitspanne (t₁) unterdrückt wird.

3. Verfahren nach Anspruch 2, **dadurch gekennzeichnet, dass** eine Unterdrückung der genannten Warnung beziehungsweise der genannten Abweisung nach Ablauf der ersten Zeitspanne (t₁) während einer zweiten Zeitspanne (t₂) unterbleibt.

4. Verfahren nach Anspruch 1 oder 2, **dadurch gekennzeichnet, dass** die erste Zeitspanne (t₁) und/oder die zweite Zeitspanne (t₂) und/oder eine Höhe einer möglichen Geschwindigkeitsüberschreitung (v₃-v₁) anhand von Parametern des Kraftfahrzeugs vorgegeben wird.

5. Verfahren nach einem der vorstehenden Ansprüche, **dadurch gekennzeichnet, dass** die die erste Zeitspanne (t₁) und/oder die zweite Zeitspanne (t₂) und/oder eine Höhe einer möglichen Geschwindigkeitsüberschreitung (v₃-v₁) abhängig von einer Fahrtrichtung vorgegeben wird.

6. Verfahren nach einem der vorstehenden Ansprüche, **dadurch gekennzeichnet, dass** die erste Zeitspanne (t₁) und/oder die zweite Zeitspanne (t₂) und/oder eine Höhe einer möglichen Geschwindigkeitsüberschreitung (v₃-v₁) abhängig von einer Uhrzeit vorgegeben wird.

7. Verfahren nach einem der vorstehenden Ansprüche, **dadurch gekennzeichnet, dass** die genannte Warnung beziehungsweise die genannte Abweisung nach Quittierung einer über Funk abgesetzten Anfrage unterdrückt wird.

8. Verfahren nach einem der vorstehenden Ansprüche, **dadurch gekennzeichnet*,* dass** die genannte Unterdrückung nur dann erfolgt, wenn vor und/oder während der Überschreitung der erlaubten Höchstgeschwindigkeit (v₁) eine Eingabe seitens des Fahrers erfolgt.

9. Verfahren nach einem der vorstehenden Ansprüche, **dadurch gekennzeichnet, dass**
- die Unterdrückung der genannten Warnung beziehungsweise der genannten Abweisung aufgehoben und/oder
- die erste Zeitspanne (t₁) verkürzt und/oder
- die zweite Zeitspanne (t₂) verlängert und/oder
- eine Höhe einer möglichen Geschwindigkeitsüberschreitung (v₃-v₁) gesenkt wird, wenn ein vom Fahrzeug abgehendes Telefongespräch detektiert wird und/oder eine vordefinierte Anforderung über ein fahrzeugexternes Funknetz empfangen wird.

10. Verfahren nach einem der vorstehenden Ansprüche, **dadurch gekennzeichnet, dass**
- die Unterdrückung der genannten Warnung beziehungsweise der genannten Abweisung aufgehoben und/oder
- die erste Zeitspanne (t₁) verkürzt und/oder
- die zweite Zeitspanne (t₂) verlängert und/oder
- eine Höhe einer möglichen Geschwindigkeitsüberschreitung (v₃-v₁) gesenkt wird, wenn eine vorgebbare Verhaltensweise des Fahrers detektiert wird.

11. Vorrichtung (1) zur Begrenzung der Geschwindigkeit eines Kraftfahrzeugs, umfassend
- eine Erfassungseinheit (9) zum Ermitteln der erlaubten Höchstgeschwindigkeit (v₁) auf einem Streckenabschnitt, auf dem sich das Kraftfahrzeug befindet, und
- Begrenzungsmittel (7, 10, 11, 13) zur Ausgabe einer Warnung bei Überschreitung der erlaubten Höchstgeschwindigkeit (v₁) oder zum Abweisen einer Anforderung, die erlaubte Höchstgeschwindigkeit (v1) zu überschreiten, **dadurch gekennzeichnet, dass**
die Begrenzungsmittel (7, 10, 11, 13) derart ausgestaltet sind, dass die genannte Warnung beziehungsweise die genannte Abweisung kurzfristig unterdrückt wird.

12. Vorrichtung (1) nach Anspruch 11, **dadurch gekennzeichnet, dass** die Begrenzungsmittel (11) an eine Diagnose-Schnittstelle (12) des Fahrzeugs angeschlossen sind.

13. Vorrichtung (1) nach Anspruch 11, **dadurch gekennzeichnet, dass** die Begrenzungsmittel eine Eingangsschnittstelle und eine Ausgangsschnittstelle umfassen, wobei die Eingangsschnittstelle zur Verbindung der Begrenzungsmittel mit einem elektronischen Gaspedal (14) und die Ausgangsschnittstelle zur Verbindung der Begrenzungsmittel mit einer Steuerung zur Veränderung der Motorleistung verbunden ist.

14. Vorrichtung (1) nach Anspruch 11, **dadurch gekennzeichnet, dass** die Begrenzungsmittel (13) dazu eingerichtet sind, die Speisespannung eines Potentiometers eines elektronischen Gaspedals (14) zu verändern.

15. Vorrichtung (1) nach Anspruch 11, **dadurch gekennzeichnet, dass** die Begrenzungsmittel einen Servomotor (10) umfasst, welcher mit einer Drosselklappe und/oder einem Gaspedal verbunden ist.
